# EUROPEAN PATENT SPECIFICATION

(11) **EP 4 008 407 B1**
(45) Date of publication and mention of the grant of the patent: **18.10.2023**
(21) Application number: 20210853.6
(22) Date of filing: 01.12.2020
(51) Int. Cl.: A62B 18/08, A41D 13/11, F16G 11/14, A62B 23/02

(54) **MASK**
MASKE
MASQUE

(43) Date of publication of application: 08.06.2022
(73) Proprietor: Makrite Industries Inc., New Taipei City 221432 (TW)
(72) Inventor: CHO, Shih-Shiung, Taipei City 114059 (TW)
(74) Representative: Cabinet Chaillot

(56) References cited:
- KR-A- 20200 113 318
- US-A- 5 182 838
- US-A1- 2019 166 929

## Description

### FIELD OF THE INVENTION

The present invention relates to a mask having cord locks attached to mask cords, and more particularly, to a mask having shape-deformable cord locks movably attached to mask cords.

### BACKGROUND OF THE INVENTION

A mask for covering a user's nose and mouth is used to filter out airborne hazardous particles. Among others, N95 medical face mask for resisting pathogens is an indispensable item, particularly when the whole world is suffering with the ongoing pandemic of corona virus disease. Even though the N95 face mask has excellent filtering capability, it is worn over a user's head to cover the face only via elastic head loops, no matter what dimensions the user's head has. To form a relatively large head loop, an elastic cord providing a relatively large tensile force is required. A mask having head loops formed of elastic cords with large tensile force might cause discomfort to the user whose head is larger in dimensions.

To solve this problem, some masks available in the market are purposefully produced to have longer head loop cords with a cord lock provided on each of the cords. The cord lock divides the loop cord into a loop section for fitting around the user's head to fix the mask to the user's face, and a remaining section. The user may use the cord lock to adjust a length of the remaining section to thereby change the length of the loop section and accordingly, the size of the head loop, allowing the head loop cord to exert a proper tensile force on the user's head for snugly covering the mask over the user's face. Masks with cord locks are disclosed in e.g. US 2019/0166929 A1 and KR 10-2020-0113318.

However, the user's face changes in shape, for example, when the user talks, which renders the head loop cords into a repeatedly pulled or stretched condition. Under this circumstance, it is possible the cord locks are brought to slide on and relative to the head loop cords to thereby increase the length of the loop sections and even result in loosened head loop cords, which will undesirably produce gaps between the user's face and the mask.

### SUMMARY OF THE INVENTION

A primary object of the present invention is to provide a mask with a cord lock that is movably attached to a mask cord without the possibility of undesired sliding relative to the mask cord. The cord lock is elastically deformable to avoid forming a gap between the mask and a user's face to preventing the user being exposed in dangerous environment.

Another object of the present invention is to provide a mask, of which each mask cord forms a size-adjustable loop section for wearing around a user's head. And, the mask has at least two adjustment mechanisms that allow the loop section of the mask cord having been adjusted to a certain size to be quickly changed to another size at any time according to changes in a contour of the user's face or head.

A further object of the present invention is to provide a mask having a plurality of adjustment mechanisms that allow change in the size of a loop section formed by a mask cord and a main body without changing the position of a cord lock relative to the mask cord while the mask can still provide secure seal and comfortable attachment to a user's face.

A still further object of the present invention is to provide a mask having a mask cord formed into a loop section for putting around a user's head, and the loop section is adjustable in size by adjusting the position of a cord lock relative to the mask cord. And the cord lock has a shape designed for improving the way in which the cord lock contacts with the user's head, making the mask comfortable for wear.

To achieve the above and other objects, a mask according to claim 1 is provided. The mask includes a main body, a mask cord respectively having two ends connected to the main body, and a cord lock attached to the mask cord. The mask cord and the cord lock together with the main body form a circle contour for putting on a user's head to fix the main body of the mask to the user's face. And, the cord lock is made of an elastic material and movable relatively with the mask cord.

The cord lock includes a locking portion and a grip portion. The locking portion is provided with a bore extended in a cord insertion direction; and the bore is elastically expandable by the mask cord, so that the mask cord is clamped by the locking portion. The grip portion has an annular wall connected to the locking portion; the annular wall internally defines a receiving space communicable with the bore of the locking portion. And, the mask cord has a confined section including two bilaterally symmetrical parts, which are received in the bore and the receiving space.

The annular wall of the grip portion includes a deformable zone and a supporting zone having a wall thickness larger than the wall thickness of the deformable zone. The locking portion, the deformable zone and the supporting zone are arranged in a straight line from bottom to top without overlapping one another in an initial state. The deformable zone is bendable to form a first bent part and a second bent part when the cord lock is subjected to a force from a direction parallel to the cord insertion direction; and the deformable zone is caused to overlap the locking portion, such that the cord lock is changed from the initial state into a invagination state. Wherein, when the cord lock is changed from the initial state into the invagination state, or changed from the invagination state into the initial state, a size of the circle contour is changed.

In an embodiment, the receiving space has a cross-sectional area smaller than or equal to the cross-sectional of the locking portion when the cord lock is in the initial state; and the deformable zone is subjected to a push by the locking portion to deform when the cord lock is in the invagination state, such that an original cross-sectional area of the deformable zone is changed to an expanded cross-sectional area.

In another operable embodiment, the receiving space has a cross-sectional area larger than that of the locking portion when the cord lock is in the initial state; such that when the cord lock is changed into the invagination state, the first bent part, the second bent part and the locking portion directly enter into the receiving space without changing the cross-sectional area of the receiving space, and the deformable zone is elongated when the supporting zone and the locking portion move closer to each other.

In an embodiment, the deformable zone has an outer side forming a conical surface, the supporting zone has an outer side forming a round surface, and an inner wall surface of the deformable zone and an inner wall surface of the supporting zone together define a cylindrical inner surface. The locking portion is located adjacent to an end of the cylindrical inner surface, and the second bent part is located at an end of the conical surface to be adjacent to the round surface.

In an embodiment, the cord lock is movable relatively with the mask cord in the cord insertion direction when the cord lock is changed from the initial state into the invagination state; and wherein the cord lock is movable relatively with the mask cord in a direction opposite to the cord insertion direction when the cord lock maintains the initial state.

The cord lock further includes an abutting portion located at an end of the grip portion opposite to the locking portion and being formed with an annular flange, the abutting portion has an outer periphery larger than that of the grip portion. The annular flange has an inner peripheral edge that is located adjacent to the receiving space and is formed into a rounded angle, and the annular flange defines a flat annular surface located perpendicular to the cord insertion direction and having an area larger than the cross-sectional area of the receiving space.

In a preferred embodiment, the mask cord is made of an elastic material and can generate a first deformation amount when being pulled; the cord lock can be moved on and relative to the mask cord to generate an amount of movement and the cord lock is compressible to generate a second deformation amount. The size of the circle contour is adjustable through any one of the amounts of movement, the first deformation amount and the second deformation amount.

In a preferred embodiment, the circle contour has a first size determined by adjusting the amount of movement, and the first size of the circle contour is changeable to a second size larger than the first size through at least one of the first deformation amount and the second deformation amount.

In a preferred embodiment, when two forces are respectively applied to the bilaterally symmetrical parts of the confined section in different direction, the locking portion can be deformed by the bilaterally symmetrical parts; a first end of the bore located adjacent to the receiving space is expanded when the bilaterally symmetrical parts are separated to each other, and a second end of the bore far away from the receiving space is narrowed by deformation of the locking portion.

In summary, the mask according to the present invention is characterized in having a cord lock made of an elastic material. The cord lock is movably attached to a mask cord, which forms a loop section for putting around a user's head, and includes a grip portion having a deformable zone and a locking portion connected to the deformable zone of the grip portion. When the cord lock is subjected to an external force applied thereto, the deformable zone of the grip portion deforms to form a first bent part and a second bent part. Therefore, the cord lock is changed from an initial state, in which the grip portion and the locking portion are not axially overlapped, into a invagination state, in which the locking portion is moved closer to the grip portion to overlap the first bent part and the second bent part. As a result, a confined section of the mask cord that is originally received in a receiving space of the grip portion is released from the receiving space to thereby increase a length of the mask cord available for forming the loop section. When there is a change in a peripheral length of the user's head, for example, when the user is talking, and the loop section becomes tenser, the increased length of the loop section can release the tension to avoid the mask from loosening from the user's head due to sliding of the cord lock and the mask cord relative to each other. This design ensures the mask to provide a secure seal.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a perspective view of a mask according to a first embodiment of the present invention;
Fig. 2 is a perspective view of a cord lock for each mask cord of the mask shown in Fig. 1;
Fig. 3 is a sectional view of the cord lock shown in Fig. 2;
Fig. 4 is a sectional view showing the cord lock of Fig. 2 in use;
Fig. 5A is a plan view of the mask cord for the mask shown in Fig. 1;
Fig. 5B shows how the mark cord of Fig. 5A is partially compressed when the cord lock is attached thereto;
Figs. 6A to 6F show the cord lock of Fig. 2 deforms when the mask cord extended there through is differently moved;
Figs. 7a to 7D show the way of using the mask of the present invention shown in Fig. 1; and
Figs. 8A and 8B show a cord lock for a mask according to a second embodiment of the present invention before use and after use, respectively.

### DETAILED DESCRIPTION OF THE PREFERRED EMBODIMENTS

The present invention will now be described with some preferred embodiments and by referring to the accompanying drawings. For the purpose of easy to understand, elements that are the same in the preferred embodiments are denoted by the same reference numerals.

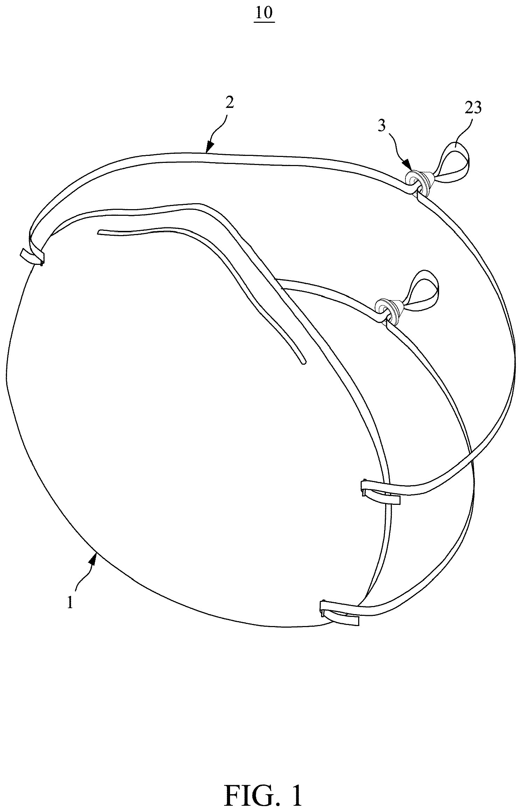

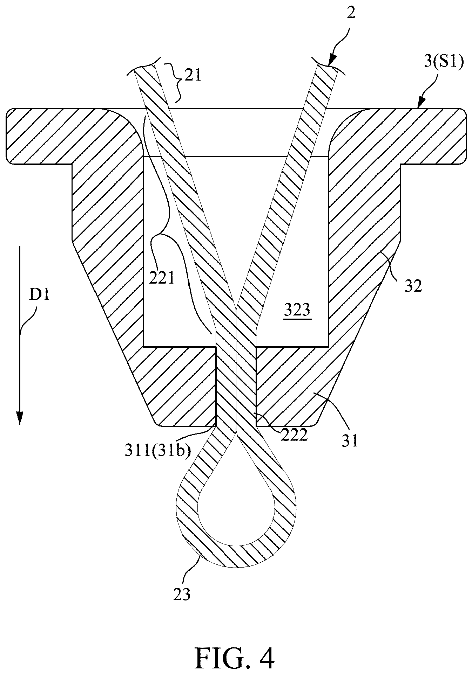

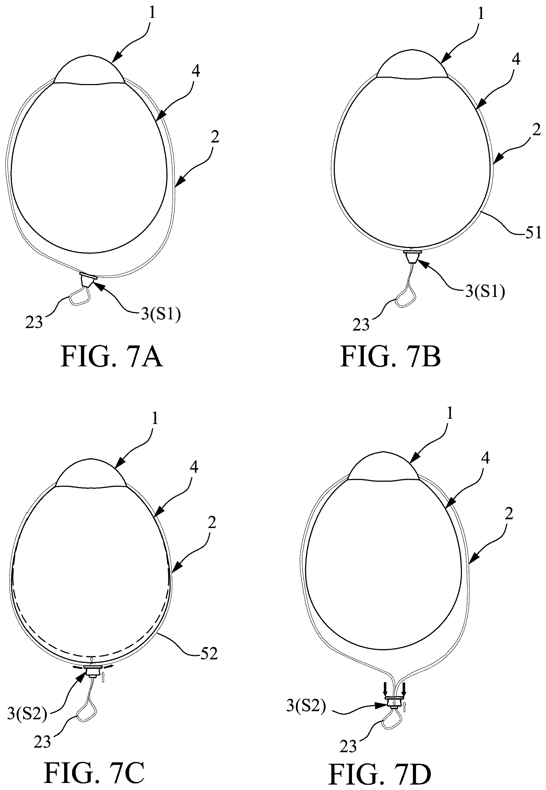

Please refer to Fig. 1 that shows a mask 10 according to a first embodiment of the present invention. As shown, the mask 10 includes a main body 1 for filtering out pollutants, two mask cords 2 connected to the main body 1, and two cord locks 3 separately attached to the two mask cords 2. The cord locks 3 are made of an elastic material and can be moved relatively with the mask cords 2, and the mask cords 2 respectively have two ends connected to the main body 1, such that the main body 1, the mask cords 2 and the cord locks 3 together define two circle contours for wearing on a user's head 4 (shown in Figs. 7A~7D) to fix the main body 1 to the user's face. As shown in Fig. 4, each of the two mask cords 2 can be divided into three generally bilaterally symmetrical sections according to their position relative to the cord lock 3, namely, a loop section 21 located between the cord lock 3 and the main body 1, a confined section located in the cord lock 3, and a remaining section 23 located at another side of the cord lock 3 opposite to the loop section 21. The confined section is further divided into two sub-sections according to whether they are clamped by the cord lock 3, namely, a reserved sub-section 221 located in but not clamped by the cord lock 3 and a clamped sub-section 222 located in and clamped by the cord lock 3.

In the first embodiment shown in Fig. 1, the main body 1 is a mask for covering a user's mouth and nose. In other operable embodiments, the main body 1 can be otherwise a full-face respirator or a half-face respirator that is currently available in the market.

In the illustrated first embodiment, the mask cords 2 respectively have two ends connected to the main body 1. However, in other operable embodiments, the mask cords 2 can be otherwise respectively have only one end connected to the main body 1 while the other end is a free end. In this case, the cord locks 3 can still be connected to a plurality of mask cords 2 to form the circle contour between the main body 1 and the cord locks 3 for wearing on the user's head 4.

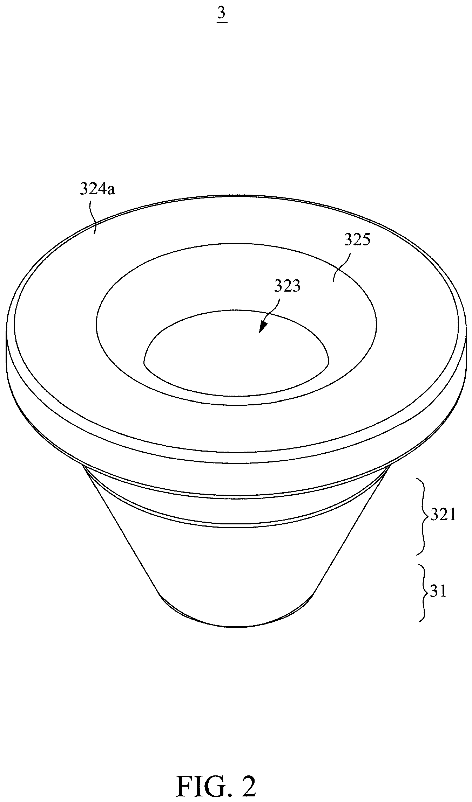

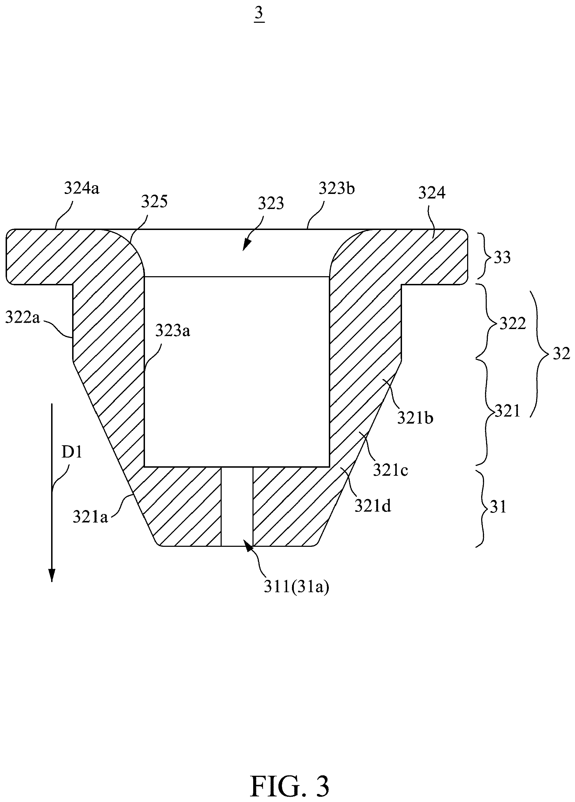

Since the two cord locks 3 are similar in structure, only one of them is described hereinafter. Please refer to Figs. 1 to 4. In the first embodiment of the present invention, the entire cord lock 3 is made of an elastic material and includes a locking portion 31, a grip portion 32 and an abutting portion 33. The locking portion 31 is mainly used to attach to the mask cord 2. For this purpose, the cord lock 3 is provided with a bore 311, and the mask cord 2 is inserted through the bore 311 in a direction, which is herein referred to as the cord insertion direction and denoted by reference numeral D1. The bore 311 has a first diameter 31a (see Fig. 3), which is elastically expandable into a second diameter 31b (see Fig. 4) when the mark cord 2 is extended there through and exerts a force on the locking portion 31 of the cord lock 3. At this point, the clamped sub-section 222 of the mask cord 2 is clamped in the bore 311, and the cord lock 3 not subjected to an external force would not easily slide on and relative to the mask cord 2 to undesirably change its position on the mask cord 2.

The grip portion 32 has an annular wall connected to the locking portion 31. The annular wall of the grip portion 32 includes a deformable zone 321 and a supporting zone 322 thicker than the deformable zone 321. The deformable zone 321 is located between the supporting zone 322 and the locking portion 31, and has a thickness gradually reduced in the cord insertion direction D1, which gives the wall of the deformable zone 321 a substantially triangular cross-sectional shape. Therefore, the deformable zone 321 has an outer side forming a conical surface 321a. The supporting zone 322 has a constant thickness in the cord insertion direction D1, which gives the wall of the supporting zone 322 a substantially rectangular cross-sectional shape. With this design, the supporting zone 322 has an outer side forming a round surface 322a connected to the conical surface 321a. Wherein, the thickness of the supporting zone 322 and of the locking portion 31 are larger than that of the deformable zone 321.

The grip portion 32 internally has a receiving space 323, which is located adjacent to the locking portion 31 and communicable with the bore 311. The receiving space 323 is an open space defined by an inner wall surface of the supporting zone 322, an inner wall surface of the deformable zone 321 and the bore 311. As shown in Figs. 3 and 4, the receiving space 323 is a substantially cylindrical structure extended toward one side of the locking portion 31 in the cord insertion direction D1 and has a cylindrical inner surface 323a formed by the inner wall surfaces of the supporting zone 322 and deformable zone 321. An end of the receiving space 323 opposite to the locking portion 31 is an opening 323b, which is diametrically larger than the bore 311. As shown in Fig. 4, when the mask cord 2 is extended through the cord lock 3, the clamped sub-section 222 is clamped in the bore 311 while the reserved sub-section 221 is received in the receiving space 323.

Referring to Fig. 3 again. The abutting portion 33 is located at an end of the grip portion 32 opposite to the locking portion 31. Due to the elasticity provided by the elastic material of the cord lock 3, the abutting portion 33 is able to fitly contact with the user's head 4 (not shown in Fig. 3). In order to increase a contact area between the cord locks 3 and the user's head 4, the abutting portion 33 is formed with an annular flange 324, which has an outer periphery larger than that of the grip portion 32. The annular flange 323 defines a flat annular surface 324a located perpendicular to the cord insertion direction D1. Preferably, the flat annular surface 324a has an area larger than a cross-sectional area of the opening 323b, so as to increase the contact area between the cord lock 3 and the user's head 4. The annular flange 324 has an inner peripheral edge that is located adjacent to the receiving space 323 and extended along the opening 323b. It is noted the inner peripheral edge of the annular flange 324 is formed into a rounded angle 325.

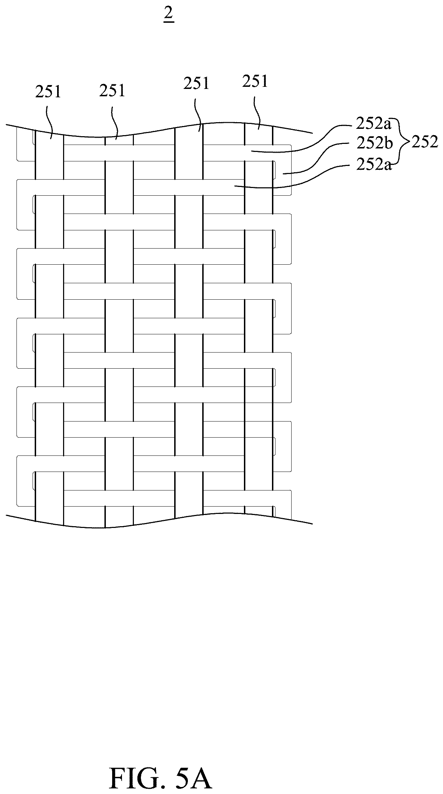

From the above description of the cord lock 3, it can be seen that the mask cord 2 and the cord lock 3 are held to each other when the clamped sub-section 222 of the mask cord 2 is compressed by the locking portion 31. Therefore, as shown in Fig. 5A, the mask cord 2 selected for use with the mask 10 is preferably formed of a plurality of elastic strip units 251 extended in the same longitudinal direction and a limiting unit 252 for connecting the elastic strip units 251 to one another, such that the mask cord 2 has a substantially rectangular cross-sectional shape.

The limiting unit 252 includes a plurality of connecting sections 252a and a plurality of U-shaped turning sections 252b. The connecting sections 252a are extended in directions perpendicular to the elastic strip units 251 to connect the latter to one another while any two adjacent connecting sections 252a are spaced from each other. The turning sections 252b are located at two opposite ends of the connecting sections 252a and each of the turning sections 252b is located between two adjacent connecting sections 252a, such that the limiting unit 252 extends in the same direction as the elastic strip units 251 in a substantially zigzag pattern. With this design, it is able to limit a space between the elastic strip units 251 in the direction perpendicular to the extending direction of the elastic strip units 251.

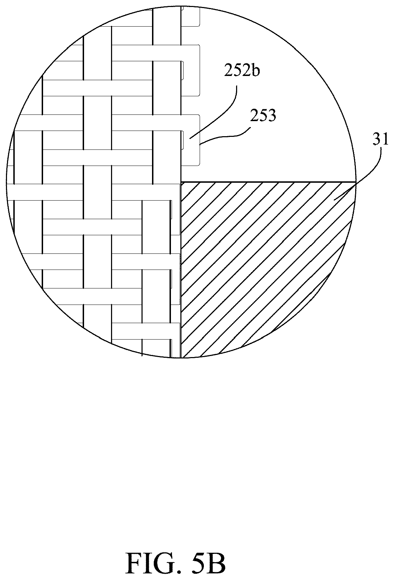

As shown in Fig. 5B, when the mask cord 2 has a part compressed by the locking portion 31 of the cord lock 3, the turning sections 252b on other parts of the mask cord 2 that are not subjected to the compression would protrude from the outer side surface of the outermost elastic strip unit 251 of the mask cord 2 to form a plurality of protruded sections 253, which increase a frictional force between the locking portion 31 and the mask cord 2.

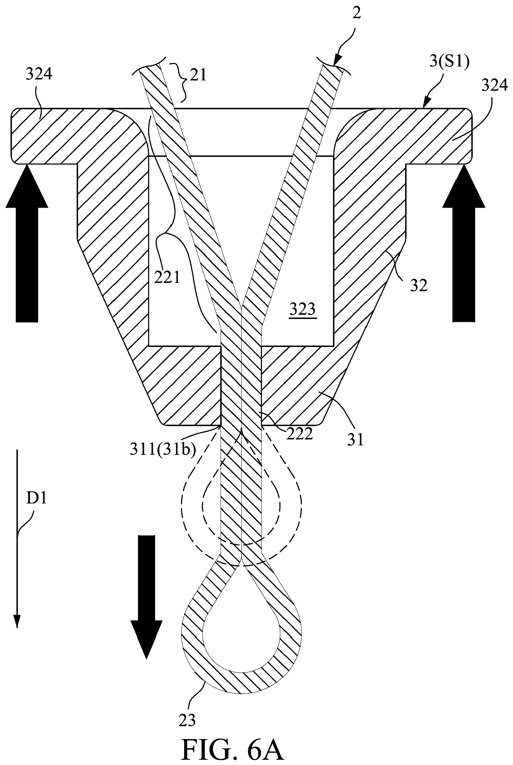

The cord lock 3 will elastically deform in different degrees when the mask cord 2 extended through the locking portion 31 is differently pulled relative to the cord lock 3. Please refer to Fig. 6A. When it is desired to move the cord lock 3 on and relative to the mask cord 2 in a direction opposite to the cord insertion direction D1, the user first applies a force on the annular flange 324 of the cord lock 3 in a direction opposite to the cord insertion direction D1, as indicated by the two upward bold black arrows, and simultaneously applies a force on the remaining section 23 of the mask cord 2 in the same direction as the cord insertion direction D1, as indicated by the downward bold black arrow. This brings the mask cord 2 and the cord lock 3 to move in two opposite directions, and allows the mask cord 2 to resist a force exerted thereon by the bore 311 of the locking portion 31 and move relative to the cord lock 3 in the cord insertion direction D1.

As can be seen in Fig. 6A, the deformable zone 321 of the cord mask 3 does not deform because it is pulled in two opposite directions by the locking portion 31 and the supporting zone 322 located at two opposite ends. Therefore, in the above process of moving the mask cord 2 relative to the cord lock 3, the cord lock 3 keeps in an initial state S1, in which the deformable zone 321 is not bent. In the initial state S1, as shown in Fig. 6A, the abutting portion 33, the supporting zone 322, the deformable zone 321 and the locking portion 31 are sequentially arranged in a straight line along the cord insertion direction D1 without overlapping one another.

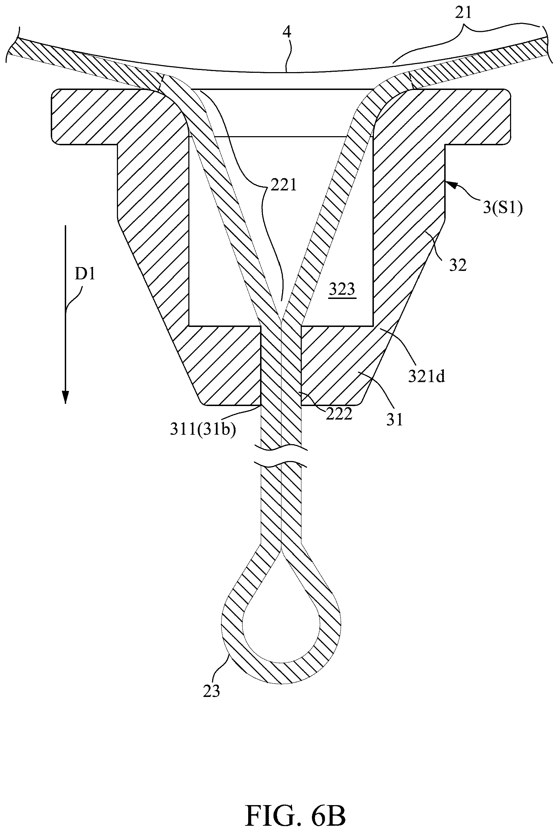

Referring to Fig. 6B. When put the circle contour of the mask 10 over the user's head 4, the cord lock 3 bears on the user's head 4 from an outer side of the mask cord 2. Due to the particularly shaped grip portion 32 and the locking portion 31, the remaining section 23 of the mask cord 2 can be located at a position away from the user's head 4.

To facilitate easy description of a positional relation among the cord lock 3, the mask cord 2 and the user's head 4, the shape and thickness of the cord lock 3 and the mask cord 2 shown in Fig. 6B all are illustrative. A person skilled in the art is supposed to know that, since the cord lock 3 is made of an elastic material, the mask cord 2 has a thickness much smaller than that of the cord lock 3 and therefore, allows the cord lock 3 to contact with the user's head 4 through the mask cord 2 when the user puts on the mask 10.

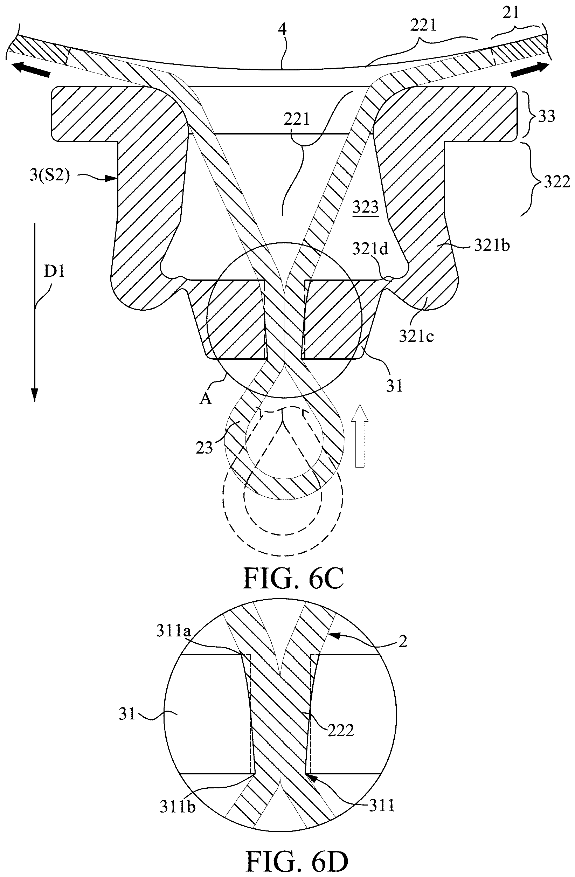

When the locking portion 31 of the cord lock 3 is subjected to a force by pulling the mask cord 2 in a direction opposite to the cord insertion direction D1, as indicated by the two black solid arrows in Fig. 6C, the locking portion 31 will be pulled by the mask cord 2 to move toward the supporting zone 322, as indicated by the white hollow arrow in Fig. 6C. In the above described process, when the supporting zone 322 and the locking portion 31 are moved closer to each other, one side of the receiving space 323 adjacent to the deformable zone 321 will expand due to an elastic deformation of the deformable zone 321 to thereby have a cross-sectional area larger than that of the locking portion 31, allowing the locking portion 31 to move in a direction opposite to the cord insertion direction D1 and enter into an interior of the supporting zone 322. At this point, a length of the receiving space 323 in the cord insertion direction D1 is shortened.

As shown in Fig. 6C, since the length of the receiving space 323 in the cord insertion direction D1 is shortened, a part of the confined section of the mask cord 2 that is initially located in the receiving space 323 shall leave the receiving space 323 because the locking portion 31 and the supporting zone 321 are moved closer to each other in the process of deformation of the cord lock 3.

In the moving process of the locking portion 31, since the receiving space 323 has a cross-sectional area smaller than that of the locking portion 31, the end of the deformable zone 321 located adjacent to the supporting zone 322 forms a first bent part 321b and another end of the deformable zone 321 located adjacent to the locking portion 31 formed a second bent part 321c in the process of deformation. It is noted the first and the second bent part 321b, 321c are extended in different directions during the deformation process, causing the deformable zone 321 to bend. Under this situation, the supporting zone 322 and the second bent part 321c are subjected to a push by the first bent part 321b and the locking portion 31, respectively, to form a recessed groove between the locking portion 31 and the deformable zone 321. At this point, the cord lock 3 is changed from the initial state S1, in which the locking portion 31, the supporting zone 322 and the deformable zone 321 are arranged in a straight line without overlapping one another, into a invagination state S2, in which the locking portion 31, the supporting zone 322 and the deformable zone 321 overlap one another.

In the illustrated first embodiment, due to the particularly designed shapes of the receiving space 323 and the deformable zone 321, a connecting part of the grip portion 32 located between the deformable zone 321 and the locking portion 31 forms a thin-wall part 321d, which has the thinnest wall thickness of the grip portion 32. The thin-wall part 321d is located close to an inner corner of the receiving space 323, and its actual wall thickness is adjustable according to the elasticity of the mask cord 2, so that the thin-wall part 321d is deformed before the first and second bent parts 321b, 321c when the cord lock 3 is changed from the initial state S1 into the invagination state S2, and which can reduce the possibility of sliding of the mask cord 2 and the locking portion 31 relative to each other.

Fig. 6D is an enlarged view of the circled area A of Fig. 6C. Please refer to Figs. 6C and 6D at the same time. When the mask cord 2 is subjected to pull or stretch in a direction opposite to the cord insertion direction D1 as shown in Fig. 6C, the two bilaterally symmetrical parts of the reserved sub-section 221 initially located in the receiving space 323 of the cord lock 3 will be pulled out of the receiving space 323 and move farther away from each other, which in turn brings the two bilaterally symmetrical parts of the clamped sub-section 222 in the bore 311 to separate farther away from each other. The separating parts of the clamped sub-section of the mask cord 2 causes a first end 311a of the bore 311 of the locking portion 31 that is located closer to the supporting zone 322 to elastically deform and thereby have an expanded cross-sectional area, as shown in Fig. 6D. Meanwhile, when the first end 311a of the bore 311 of the elastic locking portion 31 is expanded by the two separating bilaterally symmetrical parts of the clamped sub-section 222, a second end 311b of the bore 311 located farther away from the supporting zone 322 will become reduced in its cross-sectional area, also as shown in Fig. 6D, to thereby exert a stronger clamping force on the clamped sub-section 222 of the mask cord 2.

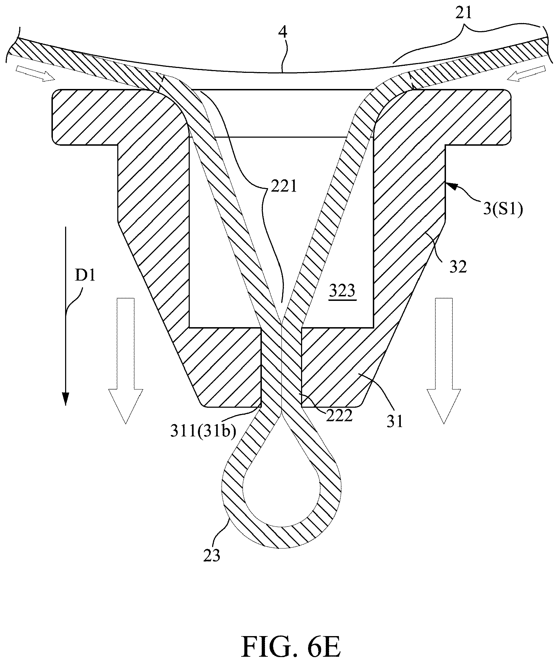

Please refer to Fig. 6E. When the cord lock 3 in the invagination state S2 is no longer subjected to the force applied thereto in the direction opposite to the cord insertion direction D1, the deformable zone 321, due to its elasticity, can automatically elastically restore from the expanded state to its original shape, and the cord lock 3 is returned to the initial state S1. Meanwhile, the locking portion 31 moves away from the supporting zone 322 again.

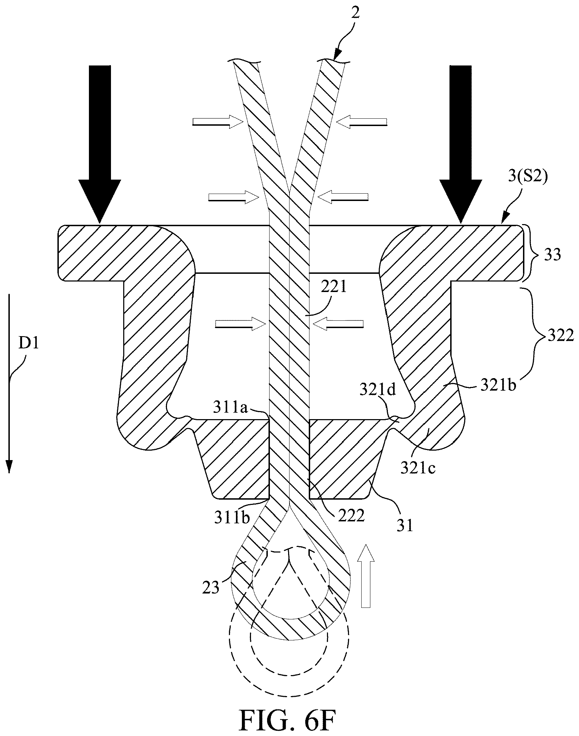

Please refer to Fig. 6F. When it is desired to move the cord lock 3 along a large length of the mask cord 2 in the cord insertion direction D1, the user may apply a force on the annular flange 324 in the cord insertion direction D1, as indicated by the two downward bold black arrows in Fig. 6F, so that the cord lock 3 can resist the frictional force between the locking portion 31 and the mask cord 2 to move.

To avoid the bore 311 of the locking portion 31 from the deformation shown in Fig. 6D in the process of pulling the mask cord 2 in the cord insertion direction D1, the user may pull the mask cord 2 for the two bilaterally symmetrical parts of the reserved sub-section 221 and of the clamped sub-section 222 to closely abut each other, as indicated by the horizontal white hollow arrows in Fig. 6F, so that the mask cord 2 can be more easily moved relative to the locking portion 31 without deforming the bore 311.

Please refer to Fig. 7A. To use the mask 10, two circle contours formed by the main body 1, the mask cords 2 and the cord locks 3 are first fitted around the user's head 4. In the event any one of the circle contours has a size too large to match that of the user's head 4, the user may adjust the position of the cord lock 3 on the mask cord 2 by moving the cord lock 3 an amount relative to the mask cord 2 to thereby change a length of the loop section 21 of the mask cord 2 that forms the circle contour, so that the size of the circle contour is reduced to a first size 51 that matches the user's head size and is determined according to the amount by which the cord lock 3 is moved on the mask cord 2, as shown in Fig. 7B. With the adjusted first size 51 of the circle contour, the mask 10 covering the user's face can maintain a secure seal. The user may refer to Figs. 6A to 6F for the detailed operating procedures of adjusting the position of the cord lock 3 on the mask cord 2.

Please refer to Fig. 7C. In the event an original contour of the user's head (as indicated by the dash line in Fig. 7C) is enlarged when the user is talking, for example, and it is necessary to change the circle contour of the first size 51 shown in Fig. 7B into a larger second size 52, the circle contour can be adjusted to the larger second size 52 in two ways. In the first way, the elasticity of the mask cord 2 allows for the production of a first deformation amount on the mask cord 2 to elastically increase the length of the loop section 21. In the second way, the cord lock 3 is elastically deformable to generate a second deformation amount on the shape of the cord lock 3 to thereby increase the size of the circle contour. The above is more detailed described in the following paragraphs.

Please refer to Figs. 7B and 7C. When the contour of the user's head 4 is enlarged, the mask cord 2 is subjected to pull or stretch and the locking portion 31 of the cord lock 3 is brought to exert a force on the user's head 4. At this point, the abutting portion 33 of the cord lock 3 is tightly pressed against the user's head 4, and the cord lock 3 is changed from the initial state S1 into the invagination state S2. In the process the cord lock 3 is changed from the initial state S1 into the invagination state S2, the locking portion 31 will move closer to the user's head 4, so that a part of the confined section of the mask cord 2 that is originally received in the receiving space 323 will now move out of the receiving space 323 via the opening 323b, which enables the original loop section 21 of the mask cord 2 to have an increased length to adapt to the enlarged contour of the user's head 4.

In the event the larger contour of the user's head 4 shown in Fig. 7C is returned to the original contour shown in Fig. 7B, the originally deformed cord lock 3 would automatically elastically recover to its original shape to thereby decrease the length of the mask cord 2 that is used to form the loop section 21. The user may refer to Fig. 6E for the detailed operating procedures of adjusting the length of the loop section 21.

Please refer to Fig. 7D. When the user wants to take off the mask 10 and needs to largely increase the size of the circle contour, the user may move the cord lock 3 along the mask cord 2 in the way described with reference to Fig. 6F to increase the length of the loop section 21.

In the process of increasing the size of the circle contour, the locking portion 31 and the grip portion 32 would first move toward each other in response to the deformation of the deformable zone 321. And, due to the movement of the locking portion 31 toward the grip portion 32, the size of the circle contour can be increased without producing an amount of movement of the mask cord 2 relative to the cord lock 3. When the mask cord 2 is subjected to further pull or stretch, the mask cord 2 would slide relative to the locking portion 31 that is in the invagination state S2, i.e. the mask cord 2 would be pulled relative to the cord lock 3 by an amount to thereby change the size of the circle contour. Then, the mask 10 can be easily taken off the user's face.

As having been mentioned above, since the locking portion 31 is formed of an elastic material, the bore 311 may be diametrically changed when the mask cord 2 is pulled or stretched relative to the cord lock 3. Therefore, when the user wants to increase the size of the circle contour as shown in Fig. 7D, it is preferable for the user to firstly change the cord lock 3 into the invagination state S2 with hand and then follow the steps described with reference to Fig. 6F to increase the size of the circle contour, in order to avoid an increased frictional force between the locking portion 31 and the mask cord 2 due to the deformation of the locking portion 31.

From the above description, it can be understood the cord lock 3 made of an elastic material can partially deform when the mask cord 2 is subjected to an external force applied thereto and accordingly, brings the locking portion 31 connected to the mask cord 2 to move toward the supporting zone 322 of the grip portion 32 via the deformation of the deformable zone 321. The movement of the locking portion 31 toward the grip portion 32 further enables releasing of a part of the confined section of the mask cord 2 that is originally received in the receiving space 323 of the cord lock 3 to thereby increase the length of the mask cord 2 that could be used to form the loop section 21. And, the size of the circle contour can be changed by any one of the following three ways: (1) moving the cord lock 3 relative to the mask cord 2 by an amount; (2) using a first deformation amount produced by the mask cord 2 due to an elasticity of its material; and (3) using a second deformation amount produced by the cord lock 3 when it is deformed.

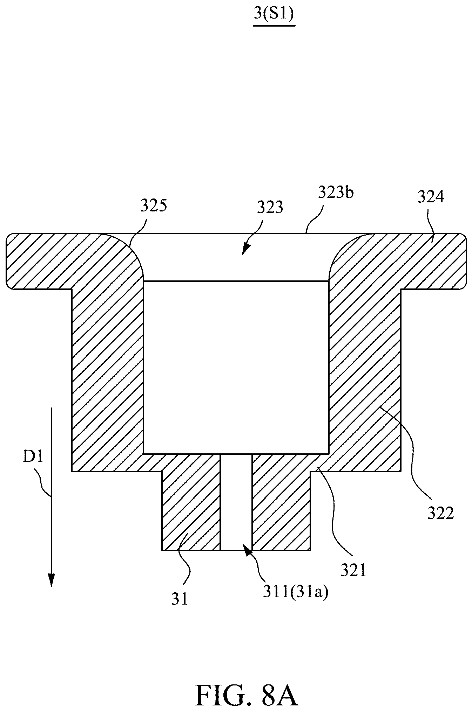

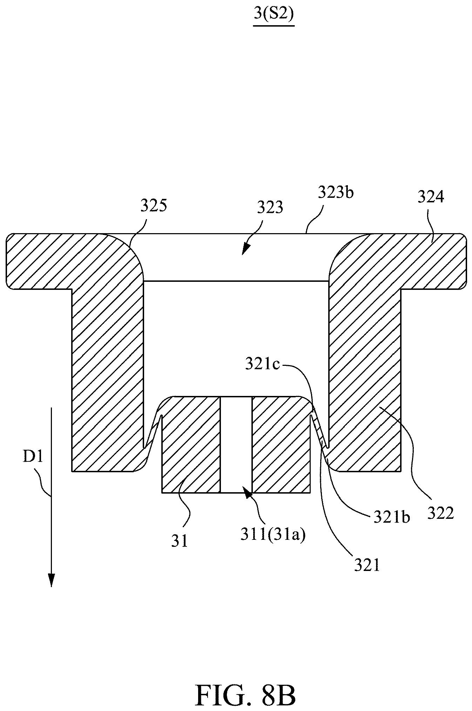

According to the present invention, the cord lock 3 is not limited to any particular shape. Please refer to Figs. 8A and 8B, which show a cord lock 3 for a mask 10 according to a second embodiment of the present invention. In the second embodiment, the cord lock 3 has a supporting zone 322 and a locking portion 31, both of which are substantially barrel-shaped and not easily deformable. The cord lock 3 in the second embodiment further has a thin diaphragm located between the supporting zone 322 and the locking portion 31 to serve as the deformable zone 321. The supporting zone 322, the deformable zone 321 and the locking port 31 together define the receiving space 323 that has a cross-sectional area larger than that of the locking portion 31.

In the first embodiment, when the cord lock 3 is subjected to an external force applied thereto, the locking portion 31 and the supporting zone 322 are moved closer to each other to thereby together exert a force on the deformable zone 321 and cause the latter to deform. Unlike the first embodiment, when the cord lock 3 for the mask 10 of the second embodiment is subjected to an external force applied thereto and brings the locking portion 31 and the supporting zone 322 to move closer to each other, since the locking portion 31 has a cross-sectional area smaller than that of the receiving space 323, the deformable zone 321 is deformed only to elastically extends its length without causing any change to the locking portion 31 and the supporting zone 322; and the deformable zone 321 automatically elastically restores its original shape when it is no long subjected to any force. In the second embodiment, the first bent part 321b is located at a joint between the deformable zone 321 and the locking portion 31, and the second bent part 321c is located at a joint between the deformable zone 322 and the supporting zone 322.

The present invention has been described with some preferred embodiments and it is understood that many changes and modifications in the described embodiments can be carried out without departing from the scope of the invention that is intended to be limited only by the appended claims.

## Claims

1. A mask (10), comprising:
a main body (1);
a mask cord (2) connected to the main body (1); and a cord lock (3) attached to the mask cord (2); the cord lock (3) and the mask cord (2) together with the main body (1) forming a circle contour for putting on a user's head (4) to fix the main body (1) to the user's face; and the cord lock (3) being made of an elastic material to be movable relatively with the mask cord (2); and
**characterized in that** the cord lock (3) includes:
a locking portion (31) provided with a bore (311) extended in a cord insertion direction (D1); and the bore (311) being elastically expandable by the mask cord (2), so that the mask cord (2) is clamped by the locking portion (31); and a grip portion (32) having an annular wall connected to the locking portion (31); the annular wall internally defining a receiving space (323) communicable with the bore (311) of the locking portion (31); and the mask cord (2) having a confined section (221, 222) including two bilaterally symmetrical parts being received in the bore (311) and the receiving space (323);
the annular wall of the grip portion (32) including a deformable zone (321) and a supporting zone (322) having a wall thickness larger than the wall thickness of the deformable zone (321); the locking portion (31), the deformable zone (321) and the supporting zone (322) are arranged in a straight line from bottom to top without overlapping one another in an initial state (S1);
the deformable zone (321) being bendable to form a first bent part (321b) and a second bent part (321c) when the cord lock (3) is subjected to a force from a direction parallel to the cord insertion direction (D1); and the deformable zone (321) is caused to overlap the locking portion (31), such that the cord lock (3) is changed from the initial state (S1) into a invagination state (S2); and
wherein when the cord lock (3) is changed from the initial state (S1) into the invagination state (S2), or changed from the invagination state (S2) into the initial state (S1), a size of the circle contour is changed accordingly.

2. The mask (10) as claimed in claim 1, wherein the receiving space (323) has a cross-sectional area smaller than or equal to the cross-sectional of the locking portion (31) when the cord lock (3) is in the initial state (S1); and the cross-sectional area of the receiving space (323) being changed to an expanded cross-sectional area when the cord lock (3) is in the invagination state (S2) and the deformable zone (321) is subjected to push by the locking portion (31) to deform.

3. The mask (10) as claimed in claim 1, wherein the receiving space (323) has a cross-sectional area larger than that of the locking portion (31) when the cord lock (3) is in the initial state (S1); such that when the cord lock (3) is changed into the invagination state (S2), the first bent part (321b), the second bent part (321c) and the locking portion (31) directly enter into the receiving space (323) without changing the cross-sectional area of the receiving space (323) and the deformable zone (321) is elongated when the supporting zone (322) and the locking portion (31) move closer to each other.

4. The mask (10) as claimed in claim 1, wherein the deformable zone (321) has an outer side forming a conical surface (321a), the supporting zone (322) has an outer side forming a round surface (322a), and an inner wall surface of the deformable zone (321) and an inner wall surface of the supporting zone (322) together define a cylindrical inner surface (323a); the locking portion (31) being located adjacent to an end of the cylindrical inner surface (323a), and the second bent part (321c) being located at an end of the conical surface (321a) to be adjacent to the round surface (322a).

5. The mask (10) as claimed in claim 1, wherein the cord lock (3) is movable relatively with the mask cord (2) in the cord insertion direction (D1) when the cord lock (3) is changed from the initial state (S1) into the invagination state (S2); and wherein the cord lock (3) is movable relatively with the mask cord (2) in a direction opposite to the cord insertion direction (D1) when the cord lock (3) maintains the initial state (S1).

6. The mask (10) as claimed in claim 1, wherein the cord lock (3) further includes an abutting portion (33) located at an end of the grip portion (32) opposite to the locking portion (31) and being formed with an annular flange (324), the abutting portion (33) has an outer periphery larger than that of the grip portion (32); the annular flange (324) having an inner peripheral edge located adjacent to the receiving space (323) and formed into a rounded angle (325), and defining a flat annular surface (324a) located perpendicular to the cord insertion direction (D1) and having an area larger than the cross-sectional area of the receiving space (323).

7. The mask (10) as claimed in claim 1, wherein the mask cord (2) is made of an elastic material and can generate a first deformation amount when being pulled; the cord lock (3) can be moved relative to the mask cord (2) to generate an amount of movement and the cord lock (3) is compressible to generate a second deformation amount; and the size of the circle contour is adjustable through any one of the amount of movement, the first deformation amount and the second deformation amount.

8. The mask (10) as claimed in claim 7, wherein the circle contour has a first size (51) determined by adjusting the amount of movement, and the first size (51) of the circle contour being changeable to a second size (52) larger than the first size (51) through at least one of the first deformation amount and the second deformation amount.

9. The mask (10) as claimed in claim 1, wherein when two forces are respectively applied to the bilaterally symmetrical parts of the confined section (221, 222) in different directions, the locking portion (31) can be deformed by the bilaterally symmetrical parts; a first end (311a) of the bore (311) located adjacent to the receiving space (323) is expanded when the bilaterally symmetrical parts are separated to each other, and a second end (311b) of the bore (311) far away from the receiving space (323) is narrowed by deformation of the locking portion (31).

## Patentansprüche

1. Maske (10), umfassend:
einen Hauptkörper (1);
eine Maskenschnur (2), die mit dem Hauptkörper (1) verbunden ist; und einen Schnurverschluss (3), der an der Maskenschnur (2) angebracht ist; wobei der Schnurverschluss (3) und die Maskenschnur (2) zusammen mit dem Hauptkörper (1) eine kreisförmige Kontur zum Aufsetzen auf den Kopf (4) eines Benutzers bilden, um den Hauptkörper (1) an dem Gesicht des Benutzers zu befestigen; und wobei der Schnurverschluss (3) aus einem elastischen Material gefertigt ist, um in Bezug auf die Maskenschnur (2) beweglich zu sein; und
**dadurch gekennzeichnet, dass** der Schnurverschluss (3) Folgendes beinhaltet:
einen Verschlussabschnitt (31), der mit einer Bohrung (311) versehen ist, die sich in einer Schnureinführungsrichtung (D1) erstreckt; und wobei die Bohrung (311) durch die Maskenschnur (2) elastisch aufweitbar ist, sodass die Maskenschnur (2) durch den Verschlussabschnitt (31) eingespannt wird; und einen Griffabschnitt (32), der eine ringförmige Wand aufweist, die mit dem Verschlussabschnitt (31) verbunden ist; wobei die ringförmige Wand innen einen Aufnahmeraum (323) definiert, der mit der Bohrung (311) des Verschlussabschnitts (31) in Kommunikation gebracht werden kann; und wobei die Maskenschnur (2) einen begrenzten Abschnitt (221, 222) aufweist, der zwei zweiseitig symmetrische Teile beinhaltet, die in der Bohrung (311) und dem Aufnahmeraum (323) aufgenommen werden;
wobei die ringförmige Wand des Griffabschnitts (32) einen verformbaren Bereich (321) und einen Stützbereich (322) beinhaltet, der eine Wandstärke aufweist, die größer ist als die Wandstärke des verformbaren Bereichs (321); wobei der Verschlussabschnitt (31), der verformbare Bereich (321) und die Stützbereich (322) in einem Ausgangszustand (S1) in einer geraden Linie von unten nach oben angeordnet sind, ohne einander zu überlappen;
der verformbare Bereich (321) biegbar ist, um einen ersten gebogenen Teil (321b) und einen zweiten gebogenen Teil (321c) zu bilden, wenn der Schnurverschluss (3) einer Kraft aus einer Richtung parallel zu der Schnureinführungsrichtung (D1) unterzogen wird; und der verformbare Bereich (321) dazu veranlasst wird, den Verschlussabschnitt (31) zu überlappen, sodass der Schnurverschluss (3) von dem Ausgangszustand (S1) in einen Einstülpungszustand (S2) geändert wird; und
wobei, wenn der Schnurverschluss (3) von dem Ausgangszustand (S1) in den Einstülpungszustand (S2) oder von dem Einstülpungszustand (S2) in den Ausgangszustand (S1) geändert wird, eine Größe der Kreiskontur entsprechend geändert wird.

2. Maske (10) nach Anspruch 1, wobei der Aufnahmeraum (323) eine Querschnittsfläche aufweist, die kleiner als oder gleich wie die Querschnittsfläche des Verschlussabschnitts (31) ist, wenn der Schnurverschluss (3) in dem Ausgangszustand (S1) ist; und wobei die Querschnittsfläche des Aufnahmeraums (323) in eine erweiterte Querschnittsfläche geändert wird, wenn der Schnurverschluss (3) in dem Einstülpungszustand (S2) ist und der verformbare Bereich (321) einem Druck durch den Verschlussabschnitt (31) ausgesetzt ist, um sich zu verformen.

3. Maske (10) nach Anspruch 1, wobei der Aufnahmeraum (323) eine größere Querschnittsfläche als der Verschlussabschnitt (31) aufweist, wenn der Schnurverschluss (3) in dem Ausgangszustand (S1) ist; sodass, wenn der Schnurverschluss (3) in den Einstülpungszustand (S2) geändert wird, der erste gebogene Teil (321b), der zweite gebogene Teil (321c) und der Verschlussabschnitt (31) direkt in den Aufnahmeraum (323) eintreten, ohne die Querschnittsfläche des Aufnahmeraums (323) zu ändern, und der verformbare Bereich (321) verlängert wird, wenn sich die Stützbereich (322) und der Verschlussabschnitt (31) näher zueinander bewegen.

4. Maske (10) nach Anspruch 1, wobei der verformbare Bereich (321) eine Außenseite aufweist, die eine konische Fläche (321a) bildet, der Stützbereich (322) eine Außenseite aufweist, die eine runde Fläche (322a) bildet, und eine Innenwandfläche des verformbaren Bereichs (321) und eine Innenwandfläche des Stützbereichs (322) zusammen eine zylindrische Innenfläche (323a) definieren; der Verschlussabschnitt (31) benachbart zu einem Ende der zylindrischen Innenfläche (323a) angeordnet ist, und der zweite gebogene Teil (321c) an einem Ende der konischen Fläche (321a) angeordnet ist, um benachbart zu der runden Fläche (322a) zu sein.

5. Maske (10) nach Anspruch 1, wobei der Schnurverschluss (3) in Bezug auf die Maskenschnur (2) in der Schnureinführungsrichtung (D1) bewegbar ist, wenn der Schnurverschluss (3) von dem Ausgangszustand (S1) in den Einstülpungszustand (S2) geändert wird; und wobei der Schnurverschluss (3) in Bezug auf die Maskenschnur (2) in einer Richtung entgegengesetzt zu der Schnureinführungsrichtung (D1) bewegbar ist, wenn der Schnurverschluss (3) den Ausgangszustand (S1) beibehält.

6. Maske (10) nach Anspruch 1, wobei der Schnurverschluss (3) ferner einen Anschlagabschnitt (33) beinhaltet, der an einem Ende des Griffabschnitts (32) gegenüber dem Verschlussabschnitt (31) angeordnet und mit einem ringförmigen Flansch (324) gebildet ist, wobei der Anschlagabschnitt (33) einen größeren Außenumfang als der Griffabschnitt (32) aufweist; der ringförmige Flansch (324) einen inneren Umfangsrand aufweist, der an den Aufnahmeraum (323) angrenzt und zu einem abgerundeten Winkel (325) geformt ist, und eine flache ringförmige Fläche (324a) definiert, die senkrecht zu der Schnureinführungsrichtung (D1) angeordnet ist und eine Fläche aufweist, die größer ist als die Querschnittsfläche des Aufnahmeraums (323).

7. Maske (10) nach Anspruch 1, wobei die Maskenschnur (2) aus einem elastischen Material gefertigt ist und beim Ziehen einen ersten Verformungsbetrag erzeugen kann; der Schnurverschluss (3) in Bezug auf die Maskenschnur (2) bewegt werden kann, um einen Bewegungsbetrag zu erzeugen, und der Schnurverschluss (3) zusammengedrückt werden kann, um einen zweiten Verformungsbetrag zu erzeugen; und die Größe der Kreiskontur durch einen beliebigen Betrag aus dem Bewegungsbetrag, dem ersten Verformungsbetrag und dem zweiten Verformungsbetrag einstellbar ist.

8. Maske (10) nach Anspruch 7, wobei die Kreiskontur eine erste Größe (51) aufweist, die durch Einstellen des Bewegungsbetrags bestimmt wird, und wobei die erste Größe (51) der Kreiskontur durch mindestens einen von dem ersten Verformungsbetrag und dem zweiten Verformungsbetrag in eine zweite Größe (52) geändert werden kann, die größer ist als die erste Größe (51).

9. Maske (10) nach Anspruch 1, wobei der Verschlussabschnitt (31) durch die zweiseitig symmetrischen Teile verformt werden kann, wenn zwei Kräfte jeweils in unterschiedlichen Richtungen auf die zweiseitig symmetrischen Teile des begrenzten Abschnitts (221, 222) angewendet werden; ein erstes Ende (311a) der Bohrung (311), das sich angrenzend an den Aufnahmeraum (323) befindet, erweitert wird, wenn die zweiseitig symmetrischen Teile voneinander getrennt werden, und ein zweites Ende (311b) der Bohrung (311), das weit von dem Aufnahmeraum (323) entfernt ist, durch Verformung des Verschlussabschnitts (31) verengt wird.

## Revendications

1. Masque (10), comprenant :
un corps principal (1) ;
un cordon de masque (2) relié au corps principal (1) ; et un verrou de cordon (3) fixé au cordon de masque (2) ; le verrou de cordon (3) et le cordon de masque (2) formant, conjointement avec le corps principal (1), un contour circulaire à placer sur la tête (4) d'un utilisateur pour fixer le corps principal (1) au visage de l'utilisateur ; et le verrou de cordon (3) étant fait d'un matériau élastique pour être mobile relativement au cordon de masque (2) ; et
**caractérisé par le fait que** le verrou de cordon (3) comprend :
une partie de verrouillage (31) comportant un alésage (311) s'étendant dans une direction d'introduction de cordon (D1) ; et l'alésage (311) étant élastiquement extensible par le cordon de masque (2), de telle sorte que le cordon de masque (2) est serré par la partie de verrouillage (31) ; et une partie de préhension (32) ayant une paroi annulaire reliée à la partie de verrouillage (31) ; la paroi annulaire définissant intérieurement un espace de réception (323) apte à communiquer avec l'alésage (311) de la partie de verrouillage (31) ; et le cordon de masque (2) ayant une section confinée (221, 222) comprenant deux parties bilatéralement symétriques reçues dans l'alésage (311) et l'espace de réception (323) ;
la paroi annulaire de la partie de préhension (32) comprenant une zone déformable (321) et une zone de support (322) ayant une épaisseur de paroi supérieure à l'épaisseur de paroi de la zone déformable (321) ; la partie de verrouillage (31), la zone déformable (321) et la zone de support (322) étant disposées en une ligne droite de bas en haut sans se chevaucher dans un état initial (S1) ;
la zone déformable (321) étant apte être pliée pour former une première partie pliée (321b) et une seconde partie pliée (321c) lorsque le verrou de cordon (3) est soumis à une force venant d'une direction parallèle à la direction d'introduction de cordon (D1) ; et la zone déformable (321) étant amenée à chevaucher la partie de verrouillage (31), de telle sorte que le verrou de cordon (3) passe de l'état initial (S1) à un état de retroussement (S2) ; et
lorsque le verrou de cordon (3) passe de l'état initial (S1) à l'état de retroussement (S2), ou de l'état de retroussement (S2) à l'état initial (S1), une taille du contour circulaire est changée en conséquence.

2. Masque (10) selon la revendication 1, dans lequel l'espace de réception (323) a une section transversale inférieure ou égale à la section transversale de la partie de verrouillage (31) lorsque le verrou de cordon (3) est dans l'état initial (S1) ; et la section transversale de l'espace de réception (323) étant amenée à passer à une section transversale élargie lorsque le verrou de cordon (3) est dans l'état de retroussement (S2) et que la zone déformable (321) est soumise à une poussée par la partie de verrouillage (31) de façon à se déformer.

3. Masque (10) selon la revendication 1, dans lequel l'espace de réception (323) a une section transversale supérieure à celle de la partie de verrouillage (31) lorsque le verrou de cordon (3) est dans l'état initial (S1) ; de telle sorte que, lorsque le verrou de cordon (3) est amené à passer à l'état de retroussement (S2), la première partie pliée (321b), la seconde partie pliée (321c) et la partie de verrouillage (31) pénètrent directement dans l'espace de réception (323) sans changer la section transversale de l'espace de réception (323) et la zone déformable (321) est allongée lorsque la zone de support (322) et la partie de verrouillage (31) se rapprochent l'une de l'autre.

4. Masque (10) selon la revendication 1, dans lequel la zone déformable (321) a un côté extérieur formant une surface conique (321a), la zone de support (322) a un côté extérieur formant une surface ronde (322a), et une surface de paroi intérieure de la zone déformable (321) et une surface de paroi intérieure de la zone de support (322) définissent ensemble une surface intérieure cylindrique (323a) ; la partie de verrouillage (31) étant située de manière adjacente à une extrémité de la surface intérieure cylindrique (323a), et la seconde partie pliée (321c) étant située à une extrémité de la surface conique (321a) pour être adjacente à la surface ronde (322a).

5. Masque (10) selon la revendication 1, dans lequel le verrou de cordon (3) est mobile par rapport au cordon de masque (2) dans la direction d'introduction de cordon (D1) lorsque le verrou de cordon (3) est amené à passer de l'état initial (S1) à l'état de retroussement (S2) ; et dans lequel le verrou de cordon (3) est mobile par rapport au cordon de masque (2) dans une direction opposée à la direction d'introduction de cordon (D1) lorsque le verrou de cordon (3) maintient l'état initial (S1).

6. Masque (10) selon la revendication 1, dans lequel le verrou de cordon (3) comprend en outre une partie de butée (33) située à une extrémité de la partie de préhension (32) opposée à la partie de verrouillage (31) et comportant une bride annulaire (324), la partie de butée (33) ayant une périphérie extérieure plus grande que celle de la partie de préhension (32) ; la bride annulaire (324) ayant un bord périphérique intérieur situé de manière adjacente à l'espace de réception (323) et formé en un angle arrondi (325), et définissant une surface annulaire plate (324a) située perpendiculairement à la direction d'introduction de cordon (D1) et ayant une section supérieure à la section transversale de l'espace de réception (323).

7. Masque (10) selon la revendication 1, dans lequel le cordon de masque (2) est fait d'un matériau élastique et peut générer une première grandeur de déformation lorsqu'il est tiré ; le verrou de cordon (3) peut être déplacé par rapport au cordon de masque (2) pour générer une grandeur de mouvement et le verrou de cordon (3) est compressible pour générer une seconde grandeur de déformation ; et la taille du contour circulaire est réglable par l'une quelconque parmi la grandeur de mouvement, la première grandeur de déformation et la seconde grandeur de déformation.

8. Masque (10) selon la revendication 7, dans lequel le contour circulaire a une première taille (51) déterminée par réglage de la grandeur de mouvement, et la première taille (51) du contour circulaire est apte à passer à une seconde taille (52) plus grande que la première taille (51) grâce à au moins une parmi la première grandeur de déformation et la seconde grandeur de déformation.

9. Masque (10) selon la revendication 1, dans lequel, lorsque deux forces sont respectivement appliquées aux parties bilatéralement symétriques de la section confinée (221, 222) dans des directions différentes, la partie de verrouillage (31) peut être déformée par les parties bilatéralement symétriques ; une première extrémité (311a) de l'alésage (311) située de manière adjacente à l'espace de réception (323) est élargie lorsque les parties bilatéralement symétriques sont séparées l'une de l'autre, et une seconde extrémité (311b) de l'alésage (311) à distance de l'espace de réception (323) est rétrécie par déformation de la partie de verrouillage (31).
